# EUROPEAN PATENT SPECIFICATION

(11) **EP 1 558 407 B1**
(45) Date of publication and mention of the grant of the patent: **13.10.2010**
(21) Application number: 03809379.5
(22) Date of filing: 21.10.2003
(51) Int. Cl.: B08B 1/04, A47L 11/282, A01M 21/02

(54) **APPARATUS FOR CLEANING THE INTERSTICES OF HARD-COVERED SURFACES**
VORRICHTUNG ZUR REINIGUNG DER ZWISCHENRÄUME VON FLÄCHEN MIT HARTEM BELAG
APPAREIL PERMETTANT DE NETTOYER LES INTERSTICES DE SURFACES A REVÊTEMENT DUR

(30) Priority: 22.10.2002 HU 0200300 U
(43) Date of publication of application: 03.08.2005
(73) Proprietor: Vácity, Jozsef, 6500 Baja (HU)
(72) Inventor: Vácity, Jozsef, 6500 Baja (HU)
(74) Representative: Kormos, Ágnes
(86) International application number: PCT/HU2003/000082
(87) International publication number: WO 2004/037451

(56) References cited:
- DE-A- 4 226 681
- DE-A- 19 627 715
- DE-A- 19 812 492
- DE-U- 9 011 758
- DE-U- 20 105 956
- DE-U- 29 623 256
- DE-U- 29 822 658
- US-A- 3 619 848
- US-A- 5 333 337

## Description

The invention constitutes an apparatus for the cleaning of the interstices between the panels of hard-covered surfaces, useful for floor coverings and tiled surfaces, where the joints require cleaning.

It is known that hard-covered surfaces, and thus the joints or interstices between various building components installed by piecing together, is done by hand, such that the surface to be cleaned is moistened and the interstices cleaned using a brush in possible combination with a chemical agent. The deficiency in this solution is that it requires a great decal, of time, and does not allow for cleaning of uniform quality verywhere.

Since at present no apparatus for this purpose is known in Hungary, various individual solutions are used, including brush adapters mounted to power tools, whose use has not been devised especially four this purpose and which are therefore neither generally known nor to be considered of adequate quality for the task.

Representing one technical solution is a "Floor and carpet cleaning machine" listed under patent number HU 172 303, consisting of a pounding apparatus, a system for storing and dispensing washing liquid, and an apparatus for collecting and recycling dry contaminants and used liquid. The machine described by this patent consists of a rotating part, comprising a beater housing, shaped like a pump housing and connected to a channel, flexible beaters, supports for the parts listed above, and a drive shaft; a system of tubing equipped with a shut-offi apparatus for dispensing washing liquid; and a pump that circulates both liquid and gaseous substances. The beaters are made of plastic, leather, rubber, or textile sheeting, preferably sections that are 5-15 cm wide. The disadvantage in this solution is that though the floor is cleaned in uniform fashion by means of the beaters, the apparatus is not equipped with a special adapter for cleaning the interstices in particular.

Another technical solution involves a special attachment mounted to any one of various vacuum cleaners, known as an interstitial cleaning tool, which may be pulled over the cleaning nozzle. With this rubber tool, water is sprayed into the interstices, after which the tool enters the crevice and cleans it. The deficiency inherent in this solution is that it must be mounted onto the cleaning nozzle separately at the time of use. In addition, the thickness of the tool itself allows for rough cleaning only, and not for thorough cleaning with results of high quality.

At the solution described by the German utility model "Hand operated cleaning apparatus" number DE 201 05 956, which discloses an apparatus in accordance with the preamble of claim 1, the placing of the drive shaft is described, as the drive shaft is protruded through the insulated opening of the housing, so the drive shaft of the brush is perpendicular to the axis of the housing and to the shaft of the motor, and the drive shaft is placed 1-4 cm-s from the outer part of the housing.

The patent specification listed under patent number DE 196 27 715 describes also an electric apparatus for cleaning of interstices, which can be made of any materials. The solution is characterised by the fact, that a brushed disc is rotating between leader components, and the rotating brushed discs can made of different materials. At this solution the fashioning of the rotating brush-disc is parallel with the midline of the apparatus, and the rotating direction, namely the shaft of the disc is perpendicular to the housing of the apparatus and also to the drive shaft of the motor.

The German utility model listed under number DE 296 23 256 describes also an apparatus, which clears away the vegetation from the interstices of the pavement, or clears away the contaminants from smooth surfaces. The apparatus is characterised by the facts, that it has wheels, or wheels, that are mountable on the chassis, and it is mounted with a stable hand-held leading bar and a disc-shaped brush. A rotatable shaft is fashioned on the chassis, which perpendicularly placed to the course, on the edge of which bristles are mounted, that are withdrawable from the floor. In the chassis a drive motor is placed, which drives the bristles. It is also characterised by the fact, that the brushes are vertically adjustable.

Representing also the state of the art the solution described in the USA patent specification listed under patent number US 5, 333,337, which concerns to the removal of adhesives or other adherent materials, which can be characterised by the facts, that:
- it possesses a body open at the upper and the lower side, into which an electric motor is encased and in that there is also a rotating shaft, to which a straight lower brush is mounted, a liquid tank mounted on the body, and a tube, which transports the liquid to the brush.
- it has a handle, which holds the apparatus in vertical position, furthermore it possesses an instrument, which energizes the motor, and in this way it whirls the brush.
- a slide instrument placed onto the bottom of the body, which sticks out, and which is above the brush, and which has a flat square bottom, which is flush with the brush, and which is above the brush in such a manner, that lets the brush touch with the contaminants on the carpet. When pushing down the body, the brush and the water together clear away the contaminant, in this way achieving the best cleaning effect.

Additional characteristics of the solution are:
- the brush is adjoined in removable way to the drive shaft,
- the water tank is placed inside the body.

Representing also the state of the art the German publishing document number DE 4226681, which although mentions the adaptation of the bristle-profile to the surface.

At the solution represented by my invention it will be particularly propounded, that the problem, solved by bristles, arranged in three rows, where the bristles in the middle row are 2-4 mm longer than the bristles of the outer rows, and the bristles are arranged according to a rectangular pattern, placed at the point of intersection of the diagonals and the corners of each rectangle. By this arrangement much more effective cleaning effect is reachable, as the bristles fashioned in this way snatch up better the contaminant.

The invention has set for itself the objective of eliminating the deficiencies inherent in all known solutions and creating an apparatus for cleaning the interstices of hard-covered surfaces, whereby the brush's bristle-profile is specially formed to fit the shape of the interstice, the apparatus is equipped with a water-protective sealing component, and the electric motor and user are protected from becoming soiled, thus enabling the cleaning of the interstices of hard-covered surfaces to be accomplished simply, quickly, and more effectively than has been achieved with previous solutions, even when the apparatus is used in a watery environment.

The solution represented by the invention is based on the recognition that if we create an interstitial cleaning apparatus in accordance with claim 1, then the interstitial cleaning apparatus thus constructed will fulfil the stated objectives.

Thus, the invention constitutes an apparatus for cleaning the interstices found on hard-covered surfaces, in accordance with claim 1, where the apparatus possesses a rotatable drive shaft, placed perpendicularly to the course, an electric motor, a disc-shaped brush is mounted with bristles on its edge, mounted in removable fashion from the protruding end of the drive shaft, a supporting and protective covering that surrounds the electric motor, a handle, a network switch equipped with a continuously adjustable RPM control, located on the handle, an electric plug that emerges from the supporting and protective covering and a supporting ring.

The apparatus represented by the invention has its brush located at the midline of the supporting and protective covering at the elongation of the shaft of electric motor, at the perimeter of the brush at least three rows of bristles are placed, where the bristles in the middle row are 2-4 mm longer than those in the two outer rows, where the bristles arranged according to a rectangular pattern, at the point of intersection of the diagonals and at the corners of each rectangle, the brush is mounted in removable fashion to the drive shaft of the electric motor, which in turn protrudes from the supporting and protective covering, such that a water-protective sealing component is inserted between the two, a protective covering is placed about the inner perimeter of brush in semicircle, and the lower part near the end of the supporting and protective covering opposite the brush, is equipped with a removable supporting ring.

In one useful embodiment of the apparatus represented by the invention, at the perimeter of the brush in the two outer rows, the outer bristles located at the corners of the rectangles are preferably separated by at least 10 mm crosswise and at most 15 mm lengthwise.

In another useful embodiment of the apparatus represented by the invention the water-protective component is a simmering, the end of the drive shaft protruding from the supporting and protective covering is fashioned with left-handed threads, with the brush mounted onto it by means of a left-threaded clamping nut.

In a third useful embodiment of the apparatus represented by the invention, designed for use from a close-up position, the handle is arranged to the upper portion of the supporting and protective covering in elongated fashion, such that it is perpendicular to the brush.

In a fourth useful embodiment of the apparatus represented by the invention, designed for use from a standing position, the handle is arranged vertically to the upper portion of the supporting and protective covering in a long-handled construction, such that the handle is bent in a direction opposite the direction of rotation of the brush.

In a fifth useful embodiment of the apparatus represented by the invention, designed for more effective cleaning, a water tank is fashioned within the handle, from which a tube leads, whose end is disposed between the brush and the protective covering, and a pump button is disposed on the handle.

In one further useful embodiment of the apparatus represented by the invention functionally elongated elliptical, Z-shaped, cooling and protective openings, designed for the protection of the electric motor from overheating and the user from becoming spattered with water, widen as they progress inward and downward are disposed on at least one side near the end of the supporting and protective covering opposite the brush.

In one further embodiment of the apparatus represented by the invention, designed for more effective protection of the brush, an outer protective covering may be attached to the apparatus in removable fashion, preferably snapped in laterally, so that it surrounds the outer perimeter of the brush.

We now discuss the solution represented by our invention in greater detail by means of drawings:
Figure 1 represents a theoretical axonometric drawing of the interstitial cleaning apparatus represented by the invention.
Figure 2 represents a side view of the brush of the interstitial cleaning apparatus represented by the invention.
Figure 3 represents a top view of the brush of the interstitial cleaning apparatus represented by the invention.

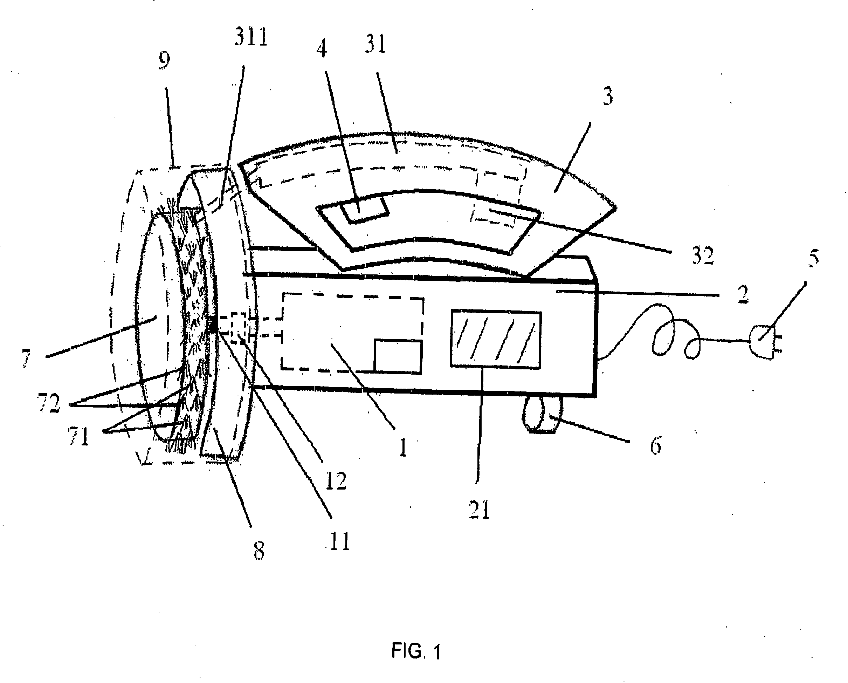

The apparatus shown in Figure 1 consists of a rotatable drive shaft 11, placed perpendicularly to the course, an electric motor 1, a brush 7 mounted in removable fashion to the protruding end of the drive shaft 11, a supporting and protective covering 2 surrounding the electric motor 1, a handle 3 disposed at the upper portion of the supporting and protective covering 2, a network switch 4 equipped with a continuously adjustable RPM control disposed at the handle 3, and an electric plug 5 that emerges from the supporting and protective covering 2. The brush 7 is disc-shaped, includes at least three rows of built-in bristles where the bristles in the middle row 71 are 2-4 mm longer than those in the two outer rows 72, where the bristles arranged according to a rectangular pattern, at the point of intersection of the diagonals and at the corners of each rectangle. By this arrangement the brush (7) ideally fitted to the shape of the interstice, the bristles snatch up better the contaminant and its' cleaning effect will be measurably greater.

The brush 7 mounted to the end of the drive shaft 11 of the electric motor 1 that protrudes from the supporting and protective covering 2, such that a water-protective sealing component 12 is inserted between the two, which sealing component 12 enables the application of the apparatus at watery environment.

Around the inner perimeter of the brush 7 in an approximate semicircle a protective covering 8 is disposed, which protects the manipulator person and the electric motor 1, while a supporting ring 6 is mounted in removable fashion to the lower portion of the supporting and protective covering 2.

In one useful embodiment of the apparatus, the end of the drive shaft 11 protruding from the supporting and protective covering 2 is left-threaded, and the brush 7 is mounted to it by means of a left-threaded clamping nut.

Figure 1 clearly shows that for close-up use the handle 3 is disposed at the upper portion of the supporting and protective covering 2 and is fashioned so as to be elongated and perpendicular to the brush 7.

When the device is used from a standing position, then the handle 3 is disposed vertically at the upper end of the supporting and protective covering 2 in a long-handled construction, and is bent in a direction opposite that of the rotation of the brush 7.

In a useful embodiment designed for more effective cleaning, a water tank 31 is fashioned within the handle 3, indicated in the drawing using a dashed line, with the end of the tube 311 leading from the water tank 31 placed between the brush 7 and the protective covering 8, and a button 32 is included on the handle 3 for dispensing the water. (In Figure 1, the tube leading from the tube 311 and the button 32 are indicated using a dashed line.)

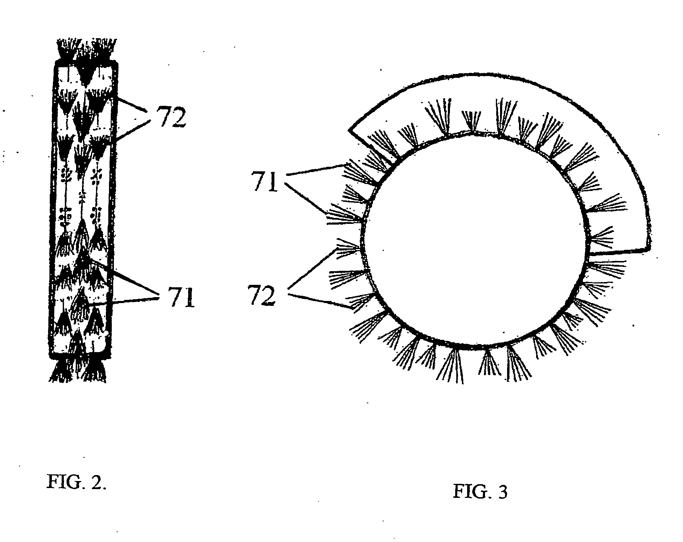

Figure 2 clearly shows the inner bristles 71 along the perimeter of the brush 7 are arranged in one row, and the outer bristles 72 are arranged in two rows, with bristles placed in a rectangular pattern at the corners and intersection points of the diagonals of each rectangle. In the middle row, the inner bristles 71 disposed at the intersection points of the diagonals of the rectangles are preferably 2-4 mm longer than the outer bristles 72 in the two outer rows, whose length is preferably 18 mm. In the two outer rows, the outer bristles 72 placed at the corners of the rectangles in the arrangement are preferably placed at least 10 mm apart crosswise and at most 15 mm apart lengthwise.

Figure 3, which shows the brush 7 in top view, clearly shows the arrangement of bristles of differing lengths. The inner bristles 71 are longer than the outer bristles 72 because the middle portion of the interstices is deeper than the outer portion, and in this way the inner bristles 71 and outer bristles 72 together allow for uniform cleaning of the entire joint area.

By this, and by the rectangular arrangement, the bristles snatch up better the contaminant, and the cleaning of the interstice happens more effectively.

The figure also shows the form of the protective covering 8, which protects the user from spattered liquid.

In another useful embodiment of the apparatus, designed for the protection of the electric motor 1 from overheating and the user from becoming spattered with water, on at least one side near the end of the supporting and protective covering 2 opposite the brush 7, functionnally elongated, elliptical, Z-shaped cooling and protective openings 21 are fashioned, that widen as they progress inward and downward.

For more effective protection of the brush 7, another useful embodiment of the apparatus includes an outer protective covering 9 that may be mounted in removable fashion, preferably snapped on laterally, to the outer perimeter of the brush 7. (In the drawing, the outer protective covering 9 is also indicated by means of a dashed line.)

The apparatus represented by the invention operates in the following manner: after first washing the surface to be cleaned with plenty of water, connecting the electric plug 5 to an appropriate 220-V electrical outlet, and turning on the network switch 4, the user holds the apparatus in on position by means of the handle 3, such that the longer, inner bristles 71 located in the centre row of the brush 7 fit into the interstices of the surface to be cleaned (flagging, tiled, etc.) surface, and, using the supporting ring 6, preferably made of plastic, holds and moves the apparatus, such that the inner bristles 71 in the centre row of the brush 7 always remain in the deeper, centre portion of the interstice, while the outer bristles 72 in the two outer rows are on the shallower portion, so that, proceeding with constant speed, the user is able to clean both the interstices and the adjacent surface evenly.

If more effective cleaning should be necessary, then water is pumped to the brush 7 through a tube 311 leading from the water tank 31 by pressing the button 32, thus moistening a possibly drying surface through the inner bristles 71 and outer bristles 72 and rendering the newly moistened surface and interstices more conducive to cleaning.

By constructing the handle 3 appropriately, the device may be used from a position close to the interstices (such as when the user bends over or squats) or from a standing position.

If, in the course of use, the inner bristles 71 and outer bristles 72, preferably made of hard plastic, should become worn, then the brush 7 must be replaced, an act accomplished by simply removing and subsequently replacing the left-threaded clamping nut.

In a useful embodiment of the device, the brush 7 is disc-shaped, its width preferably 25 mm, the length of the inner bristles 71 in the middle row preferably 21 mm, and the outer bristles 72 in the two outer rows preferably 18 mm. The protective covering 8 disposed in an approximate semi-circle about the inner perimeter of the brush 7 is preferably 20 mm in width.

On at least one side toward the end of the supporting and protective covering 2 opposite the brush 7, functionally elongated, elliptical, Z-shaped cooling and protective openings 21 that widen as they progress inward and downward are fashioned.

In one useful embodiment of the apparatus, the cooling and protective openings 21 are disposed on both sides of the supporting and protective covering 2, most practically four on each side. The length of each Z-shaped cooling and protective opening 21 designed to protect the electric motor 1 from overheating, is preferably 50 mm, while the fact that the cooling and protective openings 21 are fashioned so that they widen as they progress inward and downward, serves to protect the user against spattering.

The apparatus represented by the invention thus fulfils the objectives set forth for it above, as its use allows hard-covered surfaces and associated interstices to be cleaned simply, quickly, comfortably, and with a high-quality result.

### LIST OF DESIGNATIONS

- 1: electric motor
- 11: drive shaft
- 12: sealing component
- 2: supporting and protective covering
- 21: cooling and protective opening
- 3: handle
- 31: water tank
- 311: tube
- 32: button
- 4: network switch
- 5: electric plug
- 6: supporting ring
- 7: brush
- 71: inner bristles
- 72: outer bristles
- 8: protective covering
- 9: outer protective covering

## Claims

1. An interstitial cleaning apparatus for the cleaning of hard-covered surfaces, consisting of an electric motor (1) with a rotatable drive shaft (11), a disc-shaped brush (7) is mounted with bristles on its edge mounted to the protruding end of the drive shaft (11) in removable fashion, a supporting and protective covering (2) surrounding the electric motor (1), a handle (3) disposed at the upper portion of the supporting and protective covering (2), a network switch (4) equipped with a continuously adjustable RPM control disposed at the handle (3), an electric plug (5) leading from the supporting and protective covering (2), and a supporting ring (6), wherein the brush (7) is located at the midline of the supporting and protective covering (2) at the elongation of the shaft (11) of electric motor (1), around the perimeter of the brush (7) at least three rows of bristles built-in, that the brush (7) is secured to the end of the drive shaft (11) of the electric motor (1) that protrudes from the supporting and protective covering (2) in removable fashion, that a protective covering (8) is disposed in an approximate semi-circle about the inner perimeter of the brush (7), and that a supporting ring (6) is attached to the lower part of the supporting and protective covering (2) in removable fashion, **characterized in that** the inner bristles in the middle row (71) are 2-4 mm longer than the outer bristles in the two outer rows (72), that the bristles are arranged according to a rectangular pattern the inner briltles at the point of intersection of the diagonals and the outer bristles at the corners of each rectangle, and that a water-protective component (12) is inserted between the drive shaft (11) and the surpporting and protective covering (2).

2. The apparatus according to Claim 1, ***characterised by*** so that at the perimeter of the brush (7) the distance between two of the outer bristles (72) from the two outer rows, located at the corners of the rectangles in the rectangular pattern, is at least 10 mm crosswise and at most 15 mm lengthwise.

3. The apparatus according to Claims 1 or 2, ***characterised* by** the water-protective component (12) is a simmering the end of the drive shaft (11) protruding from the supporting and protective covering (2) is left-threaded, and the brush (7) is secured to it by means of a left-threaded clamping nut.

4. The apparatus according to any of Claims 1 through 3, ***characterised by*** for use close to the interstices to be cleaned, the handle (3) is elongated and is disposed at the upper portion of the supporting and protective covering (2) perpendicular to the brush (7).

5. The apparatus according to any of Claims 1 through 4, ***characterised by*** for use from a standing position, the handle (3) is disposed vertically at the upper portion of the supporting and protective covering (2) in a long-handled construction such that it is bent in a direction opposite that of the rotation of the brush (7).

6. The apparatus according to any of Claims 1 through 5, ***characterised by*** for more effective cleaning, a water tank (31) with a tube (311) leading from it, the end of which is disposed between the brush (7) and the protective covering (8), is fashioned within the handle (3), and the handle (3) also includes a button (32) used to pump, and hence to dispense, said water.

7. The apparatus according to any of Claims 1 through 6, ***characterised by*** functionally elongated elliptical, Z-shaped cooling and protective openings (21) designed to protect the electric motor (1) from overheating, and to protect the user against spattering, that widen as they progress inward and downward are fashioned on at least one side toward the end of the supporting and protective covering (2) opposite the brush (7).

8. The apparatus according to any of Claims 1 through 7, ***characterised by*** an outer protective covering (9) is disposed about the outer perimeter of the brush (7) so that it may be removed, preferably snapped in laterally, for more effective protection of the brush (7)

## Patentansprüche

1. Die interstitiellen Reinigungsgeräte für die Reinigung hart ummantelter Oberflächen bestehend aus, einem Elektromotor (1), mit einer drehbaren Antriebswelle (11) auf die eine Scheiben förmigen Bürste (7) mit Borsten die in ablösbaren Teilen auf die Kanten des überstehenden Endes der Antriebswelle (11) montiert wurde, einer Stütz- und Schutzhülle (2) die den Elektromotor (1) umhüllt, einem Handgriff (3) der am oberen Teil der Stütz- und Schutzhülle (2) angebracht ist, einem Netzschalter (4) der über eine stufenlos verstellbare PRM-Steuerung verfügt, angebracht am Am Handgriff (3), einem Elektrischen Stecker (5) geleitet durch die Stütz- und Schutzhülle (2) und einen Stützring (6), wobei die Bürste (7) in der Mittellinie der Stütz- und Schutzhülle (2) an der Verlängerung der Antriebswelle (11) des Elektromotors (1) angebracht ist, die Bürste (7) besteht aus mindestens drei Reihen von Borsten, sodass die ablösbaren Teile der Bürste (7) das Ende der überstehenden Antriebswelle (11) des Elektromotors (1), die aus der Stütz-und Schutzhülle (2) herausragt, sichert, die Stütz- und Schutzhülle (2) wurde in einem ungefähren Halbkreis über den inneren Rand der Bürste (7) angeordnet, und der Stützring (6) wurde am unteren Ende der Stütz- und Schutzhülle (2) in ablösbaren Teilen angebracht **dadurch gekennzeichnet, dass** die inneren Borsten der mittleren Reihe (71) 2-4 mm länger sind als die Borsten der zwei äußeren Reihen (72), die Borsten sind nach einem Rechteckigen Muster angeordnet, die inneren am Schnittpunkt der Diagonalen Borsten und die äußeren Borsten an den Ecken eines jeden Rechtecks, zudem ist dort ein Wasser-Schützendes Bauteil (12) zwischen der Antriebswelle (11) und der Stütz-und Schutzhülle (2) eingebaut.

2. Das Gerät gemäß den Anforderungen 1) ist **gekennzeichnet durch** den Umfang der Bürste (7) dem Abstand zwischen den zwei äußeren Borsten (72) aus den beiden äußeren Reihen die so angeordnet sind, dass an den Ecken der Rechtecke in den rechteckigen Mustern mindestens 10 mm quer und höchstens 15 mm lang sind.

3. Das Gerät gemäß den Anforderungen 1 oder 2, ist **gekennzeichnet durch** das Wasser-Schützende Bauteil (12) das Ende der Antriebswelle (11) welches aus der Stütz-und Schutzhülle (2) herausragt ist ein Linksgewinde, die Bürste (7) ist gesichert **durch** eine Spannmutter mit Linksgewinde.

4. Das Gerät gemäß den Anforderungen 1 bis 3, ist **gekennzeichnet** für den Einsatz zur Reinigung von nahen Zwischenräumen, der Handgriff (3) ist länglich und am oberen Teil der Stütz-und Schutzhülle (2) senkrecht zum Pinsel angebracht (7).

5. Das Gerät gemäß den Anforderungen 1 bis 4, ist **gekennzeichnet** für den Einsatz aus einer stehenden Position, der Handgriff (3) ist langstielig und wird vertikal am oberen Teil der Stütz-und Schutzhülle (2) in eine Richtung gebogen passend zur Rotation der Bürste (7).

6. Das Gerät gemäß den Anforderungen 1 bis 5, ist **gekennzeichnet** für eine effiziente Reinigung, ein Wassertank (31) mit einem Schlauch (311) führt von ihm, dessen Ende befindet sich zwischen der Bürste (7) und der Schutzhülle (8) und ist verbunden mit dem Handgriff (3), der Handgriff (3) enthält deshalb auch eine Taste (32) zur Benutzung der Pumpe um damit das Wasser zu dosieren.

7. Das Gerät gemäß den Anforderungen 1 bis 6, ist **gekennzeichnet durch** eine funktionsgemäße verlängerte, ellipsenförmige, Z-förmige kühlende und schützende Öffnung (21) entwickelt um den Elektromotor (1) vor Überhitzung zu schützen und um den Anwender vor Spritzern zu schützen, dies lässt sich je nach Gebrauch nach innen oder unten erweitern und befindet sich auf mindestens einer der Seiten gegenüber dem Ende der Stütz-und Schutzhülle (2) gegenüber dem Bürste (7) befindet.

8. Das Gerät gemäß den Anforderungen 1 bis 7, ist **gekennzeichnet durch** eine äußere Schutzhülle (9) und verfügt über eine äußere Begrenzung der Bürste (7), sodass es entfernt werden kann, möglichst seitlich, für einen wirksameren Schutz der Bürste (7)

## Revendications

1. Un appareil de nettoyage des coins, servant à nettoyer des surfaces dures, composé d'un moteur électrique (1), muni d'un arbre de transmission tournant (11), une brosse cylindrique à poils (7) est montée sur l'extrémité fixée au bord de fuite de l'arbre de transmission (11) de manière amovible, une couverture de support et de protection (2) couvrant le moteur électrique (1), une manche (3) fixée sur la partie supérieure de la couverture de support et de protection (2), un interrupteur de réseau (4) muni d'un contrôleur RPM (rotation par minute) continuellement ajustable fixé sur la manche (3), une prise électrique (5) partant de la couverture de support et de protection (2) et d'un anneau de support (6) où se situe la brosse (7) au milieu de la couverture de support et de protection (2) à la prolongation de l'arbre de transmission (11) du moteur électrique (1), atour du périmètre de la brosse (7) au moins trois lignes de poils intégrées, de sorte que la brosse (7) soit attachée au bout de l'arbre de transmission (11) du moteur électrique (1) qui est fixé à la couverture de support et de protection (2) de manière amovible.
Une couverture de protection (2) est fixée en forme de demi cercle sur le périmètre intérieur de la brosse (7), et un anneau de support (6) est attaché à la partie inférieure de la couverture de support et de protection (2) de manière amovible, de façon à ce que les poils intérieurs de la ligne du milieu (71) soient de 2 à 4 mm plus longs que les poils extérieurs situés dans les deux lignes extérieures (72), les poils sont disposés en forme rectangulaire, les poils intérieurs au point d'intersection des diagonaux et les poils extérieurs aux coins de chaque rectangle, et un élément d'étanchéité (12) est fixé entre l'arbre de transmission (11) et la couverture de support et de protection (2).

2. L'appareil conformément à la notification 1) est conçu de façon à ce que, au périmètre de la brosse (7), la distance entre les poiles extérieurs (72) des deux lignes extérieures, situées aux coins des rectangles, soit au moins 10 mm en diagonale et au maximum 15 mm dans la longueur.

3. L'appareil conformément aux notifications 1) et 2) est muni d'un' élément d'étanchéité (12), le bout de l'arbre de transmission (11) partant de la couverture de support et de protection (2) est au filetage à gauche, et la brosse (7) y est fixée par un écrou au filetage à gauche.

4. L'appareil conformément aux notifications 1) à 3) est conçue pour le nettoyage des coins, la manche (3) est allongée et fixée à la partie supérieure de la couverture de support et de protection (2), perpendiculaire à la brosse (7).

5. L'appareil conformément aux notifications 1) à 4) est destiné à une utilisation en position debout, la manche (3) est fixée verticalement à la partie supérieure de la couverture de support et de protection (2) en une structure formant une manche longue, de façon à ce qu'elle soit tournée dans le sens opposé de la rotation de la brosse (7).

6. L'appareil conformément aux notifications 1) à 5) est conçu pour un nettoyage plus performant, pour cela le réservoir d'eau (31) raccordé à un tube (311) dont le bout est fixé entre la brosse (7) et la couverture de protection (9), est muni d'une manche (3) et la manche (3) est à son tour munie d'un bouton (32) servant à pomper et à distribuer l'eau.

7. L'appareil conformément aux notifications 1) à 6) est muni d'ouvertures de refroidissement allongées, elliptiques, en forme de Z (21) servant à protéger le moteur électrique (1) de la surchauffe et à protéger l'utilisateur des éclaboussures, et elles s'ouvrent vers l'intérieur et vers l'extérieur, elles se situent au moins sur un côté, près du bout de la couverture de support et de protection (2), en face de la brosse (7).

8. L'appareil conformément aux notifications 1) à 7) est muni d'une couverture de protection supérieure (9), fixée à l'extrémité extérieure de la brosse (7) de façon amovible, de préférence fixée latéralement pour une protection plus efficace de la brosse (7).
